# EUROPEAN PATENT APPLICATION

(11) **EP 1 787 910 A1**
(43) Date of publication of application: **23.05.2007**
(21) Application number: 06077042.7
(22) Date of filing: 17.11.2006
(51) Int. Cl.: B65B 5/10

(54) **Packing system, module for use in a transport system, a transport system comprising such a module**

(30) Priority: 18.11.2005 EP 05077633; 13.09.2006 EP 06019145
(71) Applicant: FPS Food Processing Systems B.V., 2631 RE Nootdorp (NL)
(72) Inventor: van Beusekom, Hendrikus Johannes Maria, 3871 AE Hoevelaken (NL); Doppenberg, Gerrit, 3881 ST Putten (NL); Schreuder, Marinus Gerardus, 3771 XD Barneveld (NL); van den Brink, Henry, 3774 LJ Kootwijkerbroek (NL)
(74) Representative: van Loon, C.J.J.

(57) **Abstract**

This invention relates to a system for packing units (100) in packaging boxes (200), comprising the following components,
- a package feeding track (10) for feeding the packaging units (100),
- a box feeding track (20) for feeding the empty packaging boxes,
- a box discharge track (30) for discharging the filled packaging boxes,
- a gripper head (41) for engaging the packaging units (100) at a filling location of the box discharge track, and
- a control unit for executing successive packing cycles,
wherein the movement for placing the packaging units in the packaging boxes proceeds exclusively vertically.

## Description

The present invention relates to a system for packing packaging units in packaging boxes, having for both substantially rectangular boundaries and a rectangle-shaped supporting surface, comprising the following components,
- a package feeding track for feeding the packaging units,
- a box feeding track for feeding the empty packaging boxes,
- a box discharge track for discharging the filled packaging boxes,
- a gripper head for engaging the packaging units and placing these from a pick-up portion of the package feeding track into the packaging boxes at a filling location of the box discharge track, and
- a control unit for executing successive packing cycles,
wherein all movements of the moving components mentioned are performed in a single vertical plane.

Such a system is generally known, for instance under the name of Multicaser^{™}, marketed by the firm of Diamond Automations, www.diamondsystem.com, and intended for packing egg boxes in a so-called outer box, or packaging box, in which connection cases and crates may also be considered. In such a system, each packaging box is disposed manually in a feeding guide track, while with a gripper head, along an approximately arcuate path, the egg boxes, or consumer packages, are placed from the package feeding track into the above-mentioned outer boxes positioned thereunder, downstream in the conveying direction. These consumer packages are supplied from sorting machines where the eggs are sorted in large numbers, with these systems arranged at the ends of the packer tracks, or package feeding tracks, over which the consumer packages are discharged. Such total systems mostly find a place in egg packing stations, or in the packing buildings of large batteries. The size of these total systems is considerable. In this field, ongoing efforts are made towards further saving of space and greater automation.

The system as described above has several disadvantages associated with it. For instance, for total systems where correspondingly larger processing capacities are needed, at the same time increased automation will be aimed for. Not only does the gripper head require comparatively much time, but the supply of outer packages is too laborious. Further, as a result, the floor surface occupied by such a total system is enlarged very considerably.

The system according to the present invention provides a solution to the disadvantages mentioned and to that effect is characterized in that the movement for placing the packaging units in the packaging boxes proceeds exclusively vertically.

This system according to the invention has the advantage that the gripper head needs to move only in a single direction, whereby the traveling times for displacements and movements for this head and the operations performed by it are shortened considerably.

Further exemplary embodiments have as possible additional features
- that at least at the location where the packaging units are engaged with the gripper head the pick-up portion of the package feeding track comprises a separate portion which is removable, while after removal thereof an opening is obtained through which the gripper, with engaged packaging units, moves down, places the packaging units in such a packaging box positioned at the filling location, and is moved back again to the position for engaging next packaging units from the pick-up portion in a next cycle, after which the separate portion is re-placed;
- that the separate portion is designed to swing clear;
- that the swinging portion comprises at least a single supporting conveyor table;
- that the separate portion comprises at least one rolling shutter;
- that the rolling shutter is movable along an endless conveying unit;
- that the separate portion furthermore comprises an intermediate section;
- that the package feeding track consists at least partly of an endless conveyor having freely rotating rollers transversely to the conveying direction T;
- that the swinging portion of the package feeding track comprises as supporting surface freely rotating rollers transversely to the conveying direction T;
- that for the portion preceding the pick-up portion the freely rotating rollers are guided by a guide strip which causes the rollers to rotate in agreement with the traveling speed of the package feeding track, whereby intermediate space is obtained between successive units which is used for positioning the products on the pick-up portion;
- that at least a part of the box feeding track extends vertically; and/or
- that the vertical part of the box feeding track comprises a magazine for outer boxes.

The invention also relates to a module for use in a transport system having a transport track provided with a transport surface, the module comprising a number of support elements each connected with at least one end to a first part of a flexible member, which flexible member is driveable to be moveable along a path, a second part of the flexible member being free of support elements, the path having a support portion which extends substantially parallel to the transport surface of the transport track at the location of the module, the path having a storing portion, wherein the module has a support condition in which the first part of the flexible member carrying the support elements is positioned in the support portion of the path so that the support elements form a part of the transport surface of the transport track, and wherein the module has a release condition in which the first part of the flexible member carrying the support elements is positioned in the storing portion of the path so that an opening is formed in the transport surface of the transport track.

With such a module it is easy to create an opening in the transport surface of a transport track. Because the support elements are withdrawn under the objects supported therewith, a very smooth release of the objects in the downward direction through the opening is possible. Apart from that, with such a module the opening can be created in a very short time, which is important in view of the capacity of the transport system.

In further elaboration of the invention, the module can be further characterized in that:
- the support elements are rollers;
- the rollers each have a longitudinal axis around which the rollers are rotatably mounted and wherein the longitudinal axis extend perpendicular to the transport direction of the transport system;
- the module has two flexible members, wherein the support elements each are connected with a first end to one of the flexible members and with a second end to the other one of the flexible members wherein each flexible member extends along a path, wherein the path of the one flexible member is parallel to the path of the other flexible member;
- the support portion of the path extends substantially horizontal and wherein the storing portion of the path extends substantially vertical;
- the flexible members are endless flexible members; **and/or in that**
- the at least one flexible member is endless chain or an endless belt such as an endless toothed belt.

The invention also relates to a transport system comprising a module according to the invention.

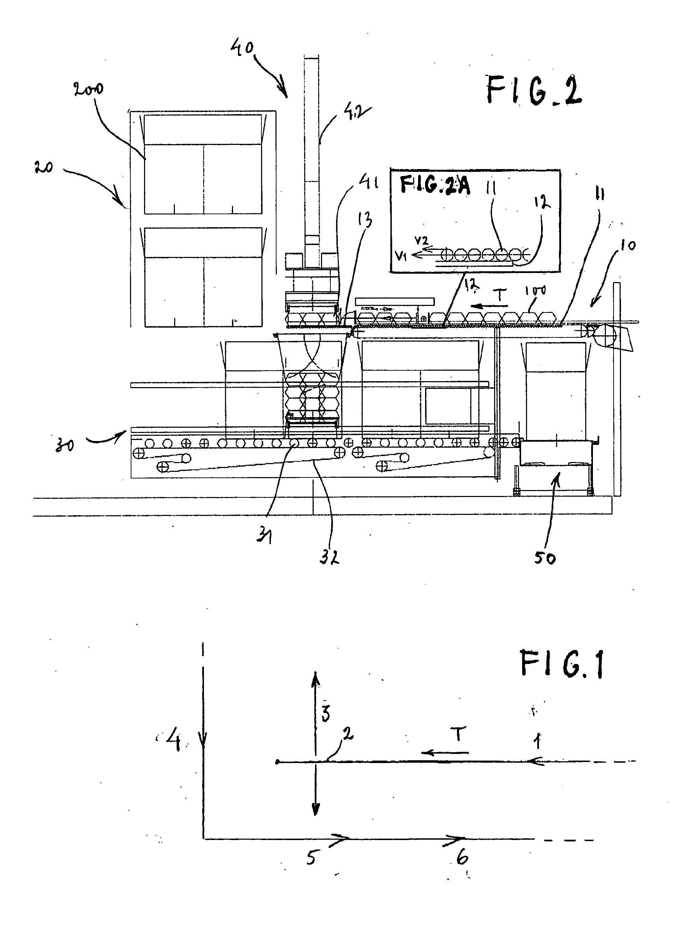

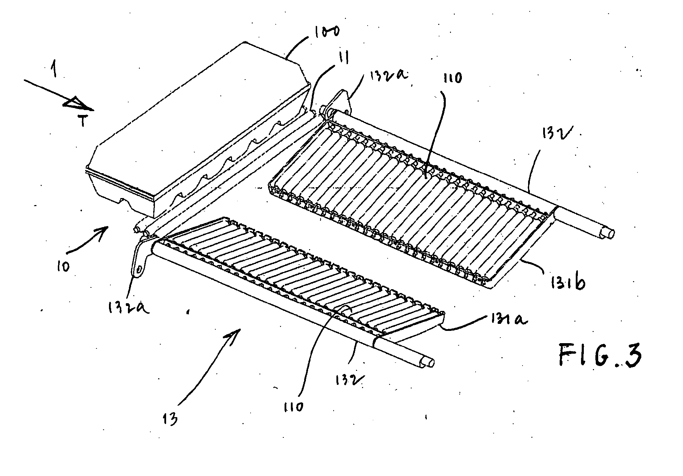

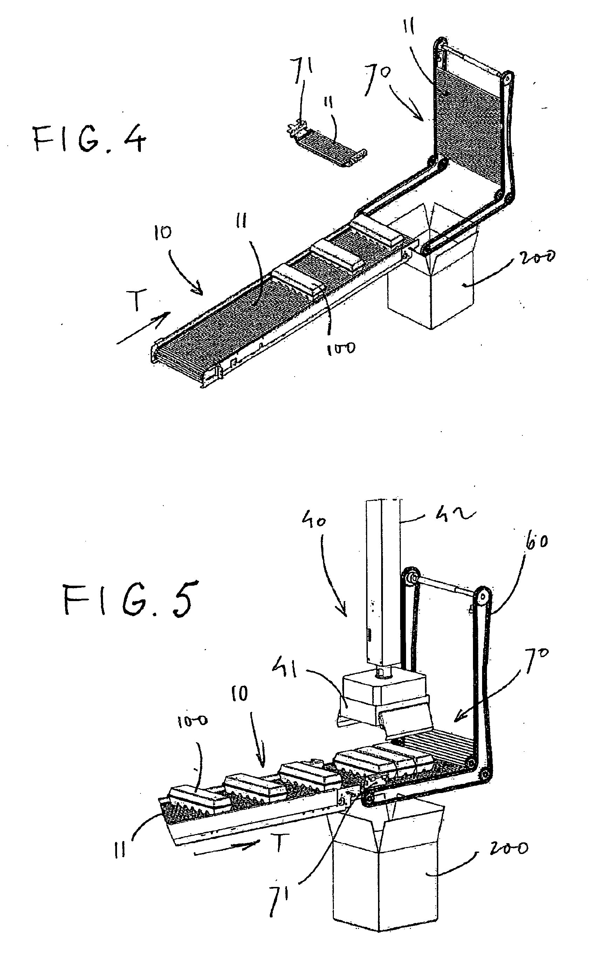

Further embodiments as well as properties, features, and advantages will be elucidated in more detail hereinafter with reference to a few figures,
wherein Fig. 1 schematically shows directions according to an exemplary embodiment of the different movements according to the invention,
wherein Fig. 2 schematically shows a side view of the situation according to Fig. 1, wherein the different components are represented in more detail, with Fig. 2A showing an enlarged section from Fig. 2,
wherein Fig. 3 shows particulars of the supporting conveyor table according to the invention,
wherein Fig. 4 shows a part of a second exemplary embodiment, and
wherein Fig. 5 shows an operative situation for the second exemplary embodiment according to Fig. 4.
In the different figures, the same reference numerals are used for equal parts.

Figs. 1, 2 and 2A will be discussed in mutual conjunction, Fig. 1 showing the movements imparted to the components and parts in Figs. 2 and 2A.

Fig. 1 schematically represents the directions of the movements of the different components of the system according to the invention, that is, in a single vertical plane. More in detail, in Fig. 1, packaging units 100 are fed in a package feeding direction 1 with a package feeding track 10. In this exemplary embodiment, this feeding track 10 is an endless conveyor, with the supporting surface being formed by freely moving rollers 11 arranged in transverse direction, for instance between two parallel endless chains. The packaging units 100 may be egg boxes, for instance of the generally used sizes 2x5, 2x6, or 2x2x3, or also trays of a size of, for instance, 5x6.

For these units 100 to be picked up with a gripper 40, at a pick-up portion, they are grouped, designated with 2. More particularly, the gripper 40 consists of a gripper head 41 on a gripper boom 42. An example of such a gripper head is known, for instance, from EP666149. In this exemplary embodiment, the gripper 40 will perform only a vertical movement in the movement direction 3 in Fig. 1. This design has as a major advantage not only that the construction is thus rendered considerably simpler than many others utilizing more composite movements, but also that the time for displacing the head is thus shortened very significantly and hence the processing capacity of this design is correspondingly greater.

The grouping referred to is done by feeding the units 100 one by one to the pick-up portion, so that upon completion of a group, for instance three units as indicated in Fig. 2, the next units 100 need to be stopped. One-by-one feeding is done with the embodiment according to Fig. 2A, in which it is indicated how the rollers 11 are passed over a fixed guide strip 12 so that they obtain a forward velocity v2 that is twice as great as the velocity v1 of the advancing package feeding track 10. This has as an effect that the packaging units 100 are separated when they sit against each other, or come further apart when they are separated already. Stopping the advancing flow of the products that cannot yet proceed to the pick-up portion can be controlled and executed in a generally known manner, for instance with a detainer (not represented in the figures) which is controlled such that, after the proper number of units for forming a group, or a single unit to be picked up, have passed, the detainer is positioned in the path of the units, transversely to the conveying direction, whereby a buffer action is obtained.

The pick-up portion consists at least partly of a supporting conveyor table 13, and forms a portion that is separate from the feeding track 10. According to the exemplary embodiment represented, this supporting conveyor table 13 is designed to swing clear, so that after the gripper head 41 has clamped and gripped the group formed, the gripper 40 as a whole can be moved vertically down.

More in detail, according to Fig. 3, the conveyor table 13 suitably consists of two halves 131 a, b connected with hinge pins 132. At their ends 132a, these halves are equipped with drives, for instance electric motors, or a pneumatic operation, with which the halves 131 a, b are swung down, and, further on in the cycle, are re-placed again. The halves of this conveyor table 13 in turn also consist of freely rotating rollers 110, now having approximately half the width of that of the rollers 11 of the feeding track 10. These rollers 110 are made of a material such that upon engagement by the gripper head 41, also a rotation, for instance a quarter turn, can be performed when so required for the purpose of stacking in the outer boxes.

The gripper 40, after engaging and clamping, and thereupon after the halves 131 a,b have swung clear, can be moved down through the opening thereby obtained and deliver the units 100 into the packaging boxes or outer boxes 200, or also crates or cases, arranged there.

The packaging boxes or outer boxes 200, or also cases or crates, are fed in box feeding direction 4 with a box feeding track 20, in this embodiment vertically downwards, with Fig. 2 showing a view of the long side of such a box 200 having a rectangular ground plan, so that the width of the system represented is equal to approximately the width of such an outer box 200. During supply, the boxes 100 are fed one by one from successive queue positions to a box discharge track 30, running under feeding track 10, in this example horizontally, with the tracks 10 and 30 forming two storeys, and with the vertical feeding part functioning as magazine.

The box discharge track 30 represented consists of a driven roller track with discharge track rollers 31 which displace the boxes, initially to a filling location 5, and then in a box discharge direction 6 whereby the boxes 200 are carried along by an endless discharge track driving belt 32.

In Fig. 2 it is indicated that in this example each outer box 200 is filled in the longitudinal direction with two stacks, so that the boxes 200 need to be moved stepwise in direction 5 along the filling location. For boxes 200 with cover, cover retainers are provided, in or perpendicular to the conveying direction, for keeping the covers open. For instance the above-described table halves may function as cover retainers. Furthermore, it will be clear that the halves of the conveyor table 13 are open as long as the gripper 40 has not yet returned to its gripping position at the pick-up portion. When the boxes 200 have been filled, and, if necessary, the covers have been closed, the boxes 200 are discharged further in the transit direction 6, with Fig. 2 indicating a downstream possibility whereby the boxes 200 are discharged with an end conveyor 50 for end transport. Furthermore, a flap table may be provided on the extreme left at the upstream end to allow manual removal of a respective box when filling fails and to provide for further normal continuation of the cycle.

Fig. 4 shows a second exemplary embodiment of the system according to the invention, where the separate portion shows a rolling shutter 70, and furthermore, for instance as desired, an insert piece 71. The rolling shutter is movable along an endless conveying unit 60. To those skilled in the art, it will be clear that the combination of the insert piece 71 and the rolling shutter 70 enables the use and the application of several sizes of outer boxes. Also for this exemplary embodiment, advantageously, use has been made of freely rotating or freely moving rollers 11.

In fact, figure 4 shows an embodiment of a module according to the invention for use in a transport system having a transport track 10 provided with a transport surface. The module comprises a number of support elements 11 each connected with at least one end to a first part of a flexible member 60. The flexible members 60 are moveable along a path. A second part of the flexible member 60 is free of support elements. The path has a support portion which extends substantially parallel to the transport surface of the transport track 10 at the location of the module. The path also has a storing portion. The module has a support condition (shown in figure 5) in which the first part of the flexible member carrying the support elements is positioned in the support portion of the path so that the support elements 11 form a part of the transport surface of the transport track 10. The module also has a release condition (shown in fig. 4) in which the first part of the flexible member carrying the support elements is positioned in the storing portion of the path so that an opening is formed in the transport surface of the transport track 10. In the embodiment shown in figure 4, the support elements are rollers 11. The rollers 11 each have a longitudinal axis around which the rollers are rotatably mounted and wherein the longitudinal axis extend perpendicular to the transport direction T of the transport system. The module shown in figure 4 and 5 has two flexible members 60, and the support elements 11 each are connected with a first end to one the flexible members and with a second end to the other one of the flexible members. Each flexible member 60 extends along a path and the path of the one flexible member is parallel to the path of the other flexible member. In the embodiment of figures 4 and 5, the support portion of the path extends substantially horizontal and the storing portion of the path extends substantially vertical. As is clear from figures 4 and 5, the flexible members are endless flexible members, such as an endless chain, an endless belt or an endless toothed belt.

To those skilled in the art, it will be clear that for the control of the system as a whole a control unit, which utilizes for instance a computer program, is used which enables execution of a cycle as described above or also variants thereon.

In a further embodiment, in the case of adjacent packer tracks or package feeding tracks, the system can be implemented as a double system in a single frame.

Further variants are understood to fall within the scope of the appended claims.

## Claims

1. A system for packing packaging units in packaging boxes, having for both substantially rectangular boundaries and a rectangle-shaped supporting surface, comprising the following components,
- a package feeding track for feeding the packaging units,
- a box feeding track for feeding the empty packaging boxes,
- a box discharge track for discharging the filled packaging boxes,
- a gripper head for engaging the packaging units and placing these from a pick-up portion of the package feeding track into the packaging boxes at a filling location of the box discharge track, and
- a control unit for executing successive packing cycles,
wherein all movements of the moving components mentioned are performed in a single vertical plane,
**characterized in that**
the movement for placing the packaging units in the packaging boxes proceeds exclusively vertically.

2. A system according to claim 1, **characterized in that** at least at the location where the packaging units are engaged with the gripper head, said pick-up portion of the package feeding track comprises a separate portion that is removable, while after removal thereof an opening is obtained through which the gripper, with engaged packaging units, moves down, places the packaging units in such a packaging box positioned at the filling location, and is moved back again to the position for engaging next packaging units from the pick-up portion in a next cycle, after which the separate portion is re-placed.

3. A system according to claim 2, **characterized in that** said separate portion is designed to swing clear.

4. A system according to claim 3, **characterized in that** the swinging portion comprises at least a single supporting conveyor table.

5. A system according to claim 3, **characterized in that** said separate portion comprises at least one rolling shutter.

6. A system according to claim 5, **characterized in that** the rolling shutter is movable along an endless conveying unit.

7. A system according to claim 3, **characterized in that** said separate portion furthermore comprises an intermediate piece.

8. A system according to any one of the preceding claims, **characterized in that** the package feeding track consists at least partly of an endless conveyor having freely rotating rollers transversely to the conveying direction T.

9. A system according to any one of the preceding claims, **characterized in that** said separate portion of the package feeding track comprises as supporting surface freely rotating rollers transversely to the conveying direction T.

10. A system according to any one of the preceding claims, **characterized in that** for the portion preceding the pick-up portion, the freely rotating rollers are guided by a guide strip which causes the rollers to rotate in agreement with the traveling speed of the package feeding track, with intermediate space being obtained between successive units which is used for positioning the products on the pick-up portion.

11. A system according to any one of the preceding claims, **characterized in that** at least a part of the box feeding track extends vertically.

12. A system according to claim 11, **characterized in that** the vertical part of the box feeding track comprises a magazine for outer boxes.

13. A module for use in a transport system having a transport track provided with a transport surface, the module comprising a number of support elements each connected with at least one end to a first part of a flexible member, which flexible member is driveable to be moveable along a path, a second part of the flexible member being free of support elements, the path having a support portion which extends substantially parallel to the transport surface of the transport track at the location of the module, the path having a storing portion, wherein the module has a support condition in which the first part of the flexible member carrying the support elements is positioned in the support portion of the path so that the support elements form a part of the transport surface of the transport track, and wherein the module has a release condition in which the first part of the flexible member carrying the support elements is positioned in the storing portion of the path so that an opening is formed in the transport surface of the transport track.

14. A module according to claim 13, wherein the support elements are rollers.

15. A module according to claim 14, wherein the rollers each have a longitudinal axis around which the rollers are rotatably mounted and wherein the longitudinal axes extend perpendicular to the transport direction of the transport system.

16. A module according to any one of claims 13-15, wherein the module has two flexible members, wherein the support elements each are connected with a first end to one of the flexible members and with a second end to the other one of the flexible members wherein each flexible member extends along a path, wherein the path of the one flexible member is parallel to the path of the other flexible member.

17. A module according to any one of claims 13-16, wherein the support portion of the path extends substantially horizontal and wherein the storing portion of the path extends substantially vertical.

18. A module according to any one of claims 13-17, wherein the flexible members are endless flexible members.

19. A module according to any one of claims 13-18, wherein the at least one flexible member is endless chain or an endless belt such as an endless toothed belt.

20. Transport system comprising a module according to any one of claims 13-19.
